# EUROPÄISCHE PATENTSCHRIFT

(11) **EP 2 323 874 B1**
(45) Veröffentlichungstag und Bekanntmachung des Hinweises auf die Patenterteilung: **06.06.2012**
(21) Anmeldenummer: 09781692.0
(22) Anmeldetag: 11.08.2009
(51) Int. Cl.: B60R 25/02

(54) **VERRIEGELUNGSVORRICHTUNG MIT ENERGIESPEICHER**
LOCKING DEVICE WITH ENERGY ACCUMULATOR
DISPOSITIF DE VERROUILLAGE AVEC ACCUMULATEUR D ÉNERGIE

(30) Priorität: 12.08.2008 DE 102008038672
(43) Veröffentlichungstag der Anmeldung: 25.05.2011
(73) Patentinhaber: Huf Hülsbeck & Fürst GmbH & Co. KG, 42551 Velbert (DE)
(72) Erfinder: KRALIK, Martin, 82362 Weilheim (DE)
(74) Vertreter: Bals, Rüdiger
(86) Internationale Anmeldenummer: PCT/EP2009/060368
(87) Internationale Veröffentlichungsnummer: WO 2010/018160

(56) Entgegenhaltungen:
- DE-A1- 10 061 960
- DE-A1-102006 057 356

## Beschreibung

Die vorliegende Erfindung bezieht sich auf eine Verriegelungsvorrichtung zur Verriegelung eines funktionswesentlichen Bauteils, insbesondere einer Lenksäule oder eines Gangschalthebels oder dergleichen bei einem Fahrzeug gemäß des Oberbegriffs von Anspruch 1. Derartige Verriegelungsvorrichtungen dienen zur Sicherung des Fahrzeugs gegen Diebstahl und/oder eine unberechtigte Benutzung, indem sie das funktionswesentliche Bauteil im gesicherten Zustand mittels eines beweglichen Sperrglieds form- und/oder kraftschlüssig verriegeln. Zu diesem Zweck kann das Sperrglied zumindest zwei Positionen einnehmen, nämlich eine Verriegelungsposition, in der das Sperrglied in einer Wirkverbindung mit dem funktionswesentlichen Bauteil steht und das Bauteil verriegelt, und eine Entriegelungsposition, in der das Sperrglied in keiner Wirkverbindung mit dem Bauteil steht, und somit das Fahrzeug zur Bedienung freigegeben ist. Um einen schnellen Wechsel von der Verriegelungsposition in die Entriegelungsposition zu ermöglichen, wird zusätzlich ein Energiespeicher eingesetzt, der diesen Wechsel unterstützt. Der Energiespeicher selbst wird bei einem Wechsel des Sperrglieds von der Entriegelungsposition in die Verriegelungsposition aufgeladen. Der Antrieb des Sperrglieds kann rein mechanisch durch einen Schließzylinder oder elektromechanisch durch einen Motor erfolgen.

Ferner ist die Erfindung auch auf ein Verfahren zum Betrieb einer Verriegelungsvorrichtung zur Verriegelung eines funktionswesentlichen Bauteils eines Fahrzeugs gemäß dem Oberbegriff von Anspruch 15 gerichtet.

Aus dem Stand der Technik ist eine Verriegelungsvorrichtung zur Blockierung einer Lenksäule eines Kraftfahrzeuges aus der gattungsbildenden Druckschrift DE 100 61 960 A1 bekannt. Auch bei dieser Verriegelungsvorrichtung wird der Wechsel des Sperrglieds zwischen der Verriegelungsposition und der Entriegelungsposition durch einen Energiespeicher unterstützt. Dabei dient der Energiespeicher dazu, diesen Wechsel zu beschleunigen, so dass das Fahrzeug nach einer ordnungsgemäßen Identifizierung und Freigabe, z. B. durch den entsprechenden Schlüssel oder ID-Geber, schnell fahrbereit wird. Einen solchen schnellen Wechsel des Sperrglieds von der Verriegelungsposition in die Entriegelungsposition ist sonst nur durch einen entsprechend groß dimensionierten Motor möglich, der einerseits teuer ist und andererseits einen entsprechenden Bauraum innerhalb der Verriegelungsvorrichtung benötigt. Um diesen Nachteil zu überwinden, wird bei der Verriegelungsvorrichtung aus der Druckschrift DE 100 61 960 A1 ein zusätzlicher Energiespeicher eingesetzt, der den Entriegelungsvorgang des Sperrglieds im Normalfall vornimmt. Bei dem Verriegelungsvorgang von der Entriegelungsposition in die Verriegelungsposition des Sperrglieds wird dieser Energiespeicher durch den Antrieb der Verriegelungsvorrichtung aufgeladen, wobei dieser Verriegelungsvorgang in der Regel zeitunkritisch und somit deutlich länger dauern darf als der entsprechende Entriegelungsvorgang. Bei dem zitierten Stand der Technik schnackt das Sperrglied durch die sprunghafte Entladung des Energiespeichers beim Entriegelungsvorgang von der Verriegelungsposition in die Entriegelungsposition. Hierdurch werden laute Knallgeräusche in der Verriegelungsvorrichtung erzeugt, die allgemein als sehr störend empfunden werden.

Somit ist es Aufgabe der vorliegenden Erfindung, eine Verriegelungsvorrichtung für Fahrzeuge zu schaffen, bei der der Entriegelungsvorgang im Wesentlichen geräuschlos vonstatten geht. Trotzdem soll bei der Verriegelungsvorrichtung nicht auf den Einsatz und die damit verbundenen Vorteile eines Energiespeichers verzichtet werden.

Zur Lösung dieser Aufgabe wird eine Verriegelungsvorrichtung mit den technischen Merkmalen des Anspruchs 1 vorgeschlagen, insbesondere mit den technischen Merkmalen des kennzeichnenden Teils, denen nachfolgende besondere Bedeutung zukommt.

Bei der erfindungsgemäßen Verriegelungsvorrichtung wird ebenfalls ein Energiespeicher eingesetzt, der zumindest teilweise mit dem Sperrglied in mechanischer Wirkverbindung steht und der bei einem Verriegelungsvorgang, d. h. bei einem Wechsel des Sperrglieds von der Entriegelungsposition in die Verriegelungsposition, aufgeladen wird. Zu diesem Zweck ist ein erstes Betätigungselement in der Verriegelungsvorrichtung vorgesehen, welches dafür sorgt, dass der Energiespeicher beim Verriegelungsvorgang aufgeladen wird. Die gespeicherte Energie des Energiespeichers wird für einen Entriegelungsvorgang genutzt, der durch den Wechsel des Sperrglieds von der Verriegelungsposition in die Entriegelungsposition stattfindet. Durch die vorliegende Erfindung ist es nunmehr vorgesehen, dass ein zweites Betätigungselement vorhanden ist, wodurch der Energiespeicher nur in einem Sonderfall bei dem Entriegelungsvorgang des Sperrglieds unterstützt wird, falls das Sperrglied eingeklemmt ist und die Energie des Energiespeichers nicht ausreicht, das Sperrglied aus der Verriegelungsposition zu bewegen. Dieser Sonderfall kann z. B. dann eintreten, falls das Sperrglied in der Verriegelungsposition durch das funktionswesentliche Bauteil eingeklemmt ist. Ist das funktionswesentliche Bauteil z. B. eine Lenkradsäule, so kann das Sperrglied durch das ungewollte Vorrollen des Fahrzeugs an eine Bordsteinkante von der Lenksäule eingeklemmt werden. Dieser Fall kann z. B. auch auftreten, wenn das funktionswesentliche Bauteil ein Gangschalthebel ist und auch hier das ungewollte Vorrollen dazu führt, dass der Gangschalthebel das Sperrglied kraft- und/oder formschlüssig einklemmt. In diesem Sonderfall kann die Energie bzw. die Kraft des Energiespeichers nicht ausreichen, um das eingeklemmte Sperrglied beim Entriegelungsvorgang in die Entriegelungsposition zu betätigen. Trotzdem muss durch die erfindungsgemäße Verriegelungsvorrichtung sichergestellt werden, dass eine Entriegelung der Vorrichtung immer, d. h. auch in dem erwähnten Sonderfall, möglich ist. Zu diesem Zweck wird der Energiespeicher beim Entriegelungsvorgang des eingeklemmten Sperrglieds durch das zweite Betätigungselement unterstützt, um somit ausreichend hohe Verstellkräfte für das Sperrglied zu erreichen. Das zweite Betätigungselement kann dabei ebenfalls wie das erste Betätigungselement durch einen Antrieb, insbesondere durch einen E-Motor, angetrieben werden, um somit das Sperrglied zu bewegen. Grundsätzlich ist es auch denkbar, dass sowohl das erste als auch das zweite Betätigungselement durch ein Zylinderschloss einer rein mechanischen Verriegelungsvorrichtung betätigt wird.

Zweckmäßige Ausgestaltungen der erfindungsgemäßen Verriegelungsvorrichtung sind in den abhängigen Unteransprüchen aufgeführt.

Bei der erfindungsgemäßen Verriegelungsvorrichtung ist es vorgesehen, dass das Sperrglied im Normalfall, wenn es nicht in der Verriegelungsposition eingeklemmt ist, durch den Energiespeicher von der Verriegelungsposition in die Entriegelungsposition überführbar ist. Folglich dient der Energiespeicher in der Regel dazu, den Entriegelungsvorgang des Sperrglieds vorzunehmen. Für diesen Entriegelungsvorgang ist keine weitere Energie, z. B. von einem Antrieb, notwendig, um das Sperrglied in die Entriegelungsposition zu bewegen. Aus diesem Grund kann der Antrieb im Normalfall beim Entriegelungsvorgang eine schnelle Drehung des ersten Betätigungselementes vornehmen, da der Antrieb im Wesentlichen Drehmoment frei läuft und keine Kraft zur Rückstellung des Sperrglieds aufbringen muss. Nur in dem beschriebenen Sonderfall, in dem das Sperrglied eingeklemmt ist, kann es erforderlich sein, dass die Entriegelungsenergie des Energiespeichers nicht ausreicht, das Sperrglied aus der Verriegelungsposition zu bewegen. In diesem Sonderfall ist das zweite Betätigungselement erforderlich, um zusätzlich eine Kraft auf das Sperrglied auszuüben, um es somit von der Verriegelungsposition in die Entriegelungsposition zu bewegen. Aufgrund der unterschiedlichen Ausgestaltung der beiden Betätigungselemente, insbesondere der jeweiligen Außenkonturen, durch die eine Betätigung des Sperrglieds erfolgt, kann eine ausreichend große, zusätzliche Rückstellkraft auf das ein geklemmte Sperrglied wirken, obwohl der Antrieb ein schnelle Drehgeschwindigkeit innehat. Somit dient die schwach ansteigende, schneckenförmige Außenkontur des zweiten Betätigungselements als Übersetzung, (tatsächlich als Untersetzung) für das Drehmoment und die vom Antrieb erzeugte Rückstellkraft, die beide durch die Untersetzung vergrößert werden. Der Antrieb selbst kann in beide Drehrichtungen betrieben werden, wobei ein Wechsel der Drehrichtung zu einer Änderung der Bewegungsrichtung des Sperrglieds führt.

Ferner ist es vorgesehen, dass der Energiespeicher das Sperrglied (grundsätzlich) in Richtung der Entriegelungsposition drückt, wobei das erste Betätigungselement der Wirkung des Energiespeichers bei einem Wechsel des Sperrglieds von der Entriegelungsposition in die Verriegelungsposition (Verriegelungsvorgang) entgegen wirkt und hierdurch den Energiespeicher auflädt. Da das Sperrglied selbst nicht direkt durch das erste Betätigungselement betätigt wird und nur mit dem Energiespeicher mechanisch zusammen wirkt, ist eine zusätzliche Feder vorgesehen, die das Sperrglied immer in Richtung der Verriegelungsposition drückt, damit es dem Energiespeicher beim Verriegelungsvorgang, in dem der Energiespeicher durch das erste Betätigungselement betätigt wird, erfolgen kann. Grundsätzlich ist die Federkraft, die von der Feder auf das Sperrglied wirkt, geringer als die Kraft des Energiespeichers, die in umgekehrter Richtung auf das Sperrglied wirkt. Nur durch die zusätzliche Kraft des ersten Betätigungselements ist es somit möglich, dass das Sperrglied gegen die Kraft des Energiespeichers von der Entriegelungsposition in die Verriegelungsposition überführt wird. Sobald die zusätzliche Kraft des ersten Betätigungselements nicht mehr vorhanden ist, da ein Wechsel von der Verriegelungsposition in die Entriegelungsposition stattfindet, überwiegt die Kraft des Energiespeichers der Kraft der zusätzlichen Feder, die nur auf das Sperrglied wirkt, um das Sperrglied somit in die Entriegelungsposition zu überführen. Nur in dem erwähnten Sonderfall reicht diese Kraft des Energiespeichers nicht aus, da das Sperrglied durch das funktionswesentliche Bauteil eingeklemmt ist. Somit muss eine zusätzliche Kraft auf das Sperrglied wirken, um den Entriegelungsvorgang einzuleiten. Diese zusätzliche Kraft wird von dem zweiten Betätigungselement ausgeübt, welches direkt auf das Sperrglied überträgt. Der Energiespeicher steht folglich im Normalfall mit dem ersten Betätigungselement in mechanischer Wirkverbindung und wird durch das erste Betätigungselement aufgeladen.

Im Normalfall wirkt der Energiespeicher mit dem Sperrglied mechanisch zusammen, wobei der Energiespeicher formschlüssig mit dem Sperrglied verbunden ist und insbesondere ein Spiel bei dem Formschluss zwischen den beiden Elementen vorgesehen ist. Dieses Spiel dient dazu, dass das Sperrglied beim Verriegelungsvorgang nicht zwanghaft der Bewegung des ersten Betätigungselements bzw. des Energiespeichers folgen muss, falls das Sperrglied auf ein herausragendes Teil des funktionswesentlichen Bauteils trifft. Dieses kann z. B. dann der Fall sein, wenn das Sperrglied nicht in eine Ausnehmung des funktionswesentlichen Bauteils eindringen kann, sondern auf einen herausstehendem Teil, insbesondere in Form eines Nockens, trifft, der zwischen zwei Ausnehmungen in dem funktionswesentlichen Bauteil angeordnet ist. Um einen zerstörungsfreien Betrieb der Verriegelungsvorrichtung zu ermöglichen, ist somit das Spiel im Formschluss zwischen dem Energiespeicher und dem Sperrglied vorgesehen.

Das erste Betätigungselement übt eine Druckkraft auf den Energiespeicher beim Verriegelungsvorgang aus, wodurch der Energiespeicher insgesamt aufgeladen wird. Hierdurch entsteht die mechanische Wirkverbindung zwischen dem ersten Betätigungselement und dem Energiespeicher, wobei insbesondere das erste Betätigungselement nockenförmig, insbesondere mit schneckenförmiger Kontur, ausgestaltet sein kann. Ferner wirkt im Normalfall der Energiespeicher mit dem Sperrglied mechanisch zusammen, durch den bereits zuvor genannten Formschluss, der auch ein Spiel aufweisen kann. Damit drückt das erste Betätigungselement selbst nicht das Sperrglied beim Verriegelungsvorgang nieder, sondern betätigt vielmehr den Energiespeicher, der wiederum mit dem Sperrglied mechanisch gekoppelt ist.

Optional ist es vorgesehen, dass das zweite Betätigungselement mit dem ersten Betätigungselement mechanisch gekoppelt ist, wobei insbesondere die beiden Betätigungselemente einstückig ausgestaltet sind. Folglich können die beiden Betätigungselemente ein Teil bilden, die unterschiedliche Funktionen auf das Sperrglied bzw. direkt ausüben. Das erste Betätigungselement wirkt nur indirekt über den Energiespeicher auf das Sperrglied, um das Sperrglied von der Entriegelungsposition in die Verriegelungsposition zu bewegen. Das zweite Betätigungselement wirkt nur im Sonderfall, falls das Sperrglied eingeklemmt ist, um direkt das Sperrglied aus der Verriegelungsposition zu bewegen. Dabei ist es denkbar, dass das zweite Betätigungselement neben dem ersten Betätigungselement angeordnet ist und insbesondere im Sonderfall direkt mit dem Sperrglied mechanisch zusammenwirkt. Ferner können das erste und das zweite Betätigungselement nockenförmig auf einer Steuerwelle angeordnet sein, wobei insbesondere die Steuerwelle direkt oder indirekt mittels eines Getriebes antreibbar ist. Als Antrieb kann hierbei ein Elektromotor oder ein mechanisches Zylinderschloss vorgesehen sein, um die beiden Betätigungselemente und somit den Energiespeicher und das Sperrglied anzutreiben. Sofern das erste und zweite Betätigungselement auf einer Steuerwelle angeordnet ist, weisen diese einen Axialversatz auf der Steuerwelle auf, so dass sie in axialer Richtung nebeneinander angeordnet sind, um ihre unterschiedlichen Funktionen wahrzunehmen. Hierbei ist es denkbar, dass das erste Betätigungselement direkt neben dem zweiten Betätigungselement angeordnet ist und beide nockenförmig ausgestaltet sind. Im Normalfall ist der Energiespeicher ständig in Kontakt mit dem ersten Betätigungselement, so dass sich kein Spalt zwischen dem ersten Betätigungselement und dem Energiespeicher bildet. Hierbei können grundsätzlich Kräfte zwischen dem ersten Betätigungselement und dem Energiespeicher an der Kontaktstelle übertragen werden. Nur im Sonderfall kann sich ein Spalt oder ein sogenannter Stallt von ca. 0,2 bis 1 mm, insbesondere 0,4 bis 0,6 mm bilden, so dass kein direkter Kontakt mehr zwischen den beiden Elementen vorliegt. In diesem Fall hat das zweite Betätigungselement i. d. R. einen direkten Kontakt zum Sperrglied und drückt dieses aus der Verriegelungsstellung zusätzlich zur Kraft des Energiespeichers in die Entriegelungsposition. Sobald das Sperrglied nicht mehr eingeklemmt ist, wirkt nur noch der Energiespeicher, so dass das Sperrglied sich auch von dem zweiten Betätigungselement löst und gegen das erste Betätigungselement indirekt über den Energiespeicher drückt. Ein lautes Knallgeräusch, wie im erwähnten Stand der Technik, kommt hierbei nicht zu Stande, da das Sperrglied nur das erwähnte Spiel bzw. den Stallt überspringt. Anschließend wird das Sperrglied beim Entriegelungsvorgang durch das erste Betätigungselement zurück in die Entriegelungsposition überführt, wobei es ständig in Kontakt mit dem ersten Betätigungselement ist. Das zweite Betätigungselement hat in diesem Fall keinen Kontakt mehr zu dem Sperrglied und weist somit vielmehr ein deutliches Spiel zum Sperrglied auf.

An der zuvor erwähnten Steuerwelle kann ebenfalls ein Zahnrad angeordnet sein, insbesondere in Form eines Schneckenrades, welches mechanisch mit dem ersten und dem zweiten Betätigungselement verbunden ist, um diese anzutreiben. Sofern das gewählte Getriebe als Schneckenradgetriebe ausgestaltet ist, weist es eine selbsthemmende Wirkung auf, so dass eine umgekehrt eingeleitete Bewegung, die auf das Sperrglied wirkt, nicht dazu führt, dieses zu betätigen, da das Antriebsritzel, durch die selbsthemmende Wirkung des Getriebes, nicht mitgedreht werden kann. Das Antriebsritzel kann selbst direkt mit einer Motorwelle eines E-Motors verbunden sein, wobei es ebenfalls denkbar ist, dass auch weitere Getriebestufen vorgesehen sind. Auch kann das Antriebsritzel über eine weitere mechanische Verbindung mit einem mechanischen Zylinderschloss zusammenwirken. Der Antrieb kann optional mit zwei unterschiedlichen Geschwindigkeiten betrieben werden, um das erforderliche Drehmoment bzw. Verstellkraft für das Sperrglied bereitzustellen. Beim Entriegelungsvorgang kann eine deutlich höhere Geschwindigkeit genutzt werden als beim Verriegelungsvorgang, bei dem der Antrieb die eigentliche Arbeit leistet, da dieser den Energiespeicher auflädt und das Sperrglied hierdurch bewegt. Im Normalfall hat der Antrieb beim Entriegelungsvorgang hingegen keine Arbeit zu verrichten, da diese von dem aufgeladenen Energiespeicher übernommen wird.

Der bei der erfindungsgemäßen Verriegelungsvorrichtung vorgesehene Energiespeicher kann zumindest ein Federelement aufweisen, welches durch das erste Betätigungselement vorspannbar ist, wodurch der Energiespeicher seine Energie auflädt. Diese Energie wird als Federenergie in dem Federelement des Energiespeichers gespeichert. Um den Energiespeicher möglichst einfach aufzuladen, kann dieser einen Stößel aufweisen, der mit dem Federelement verbunden ist. Dabei wirkt das erste Betätigungselement, insbesondere durch eine Druckkraft beim Laden des Energiespeichers, mit dem Stößel mechanisch zusammen. Das erwähnte Federelement kann selbst teilweise in einem Sockel fest positioniert sein, wobei der Sockel insbesondere unlösbar mit einer Halteplatte, die einen Teil eines Gehäuses der Verriegelungsvorrichtung bildet, verbunden ist. Somit ist das Federelement fest in dem Sockel eingespannt und der freibewegliche Teil, an dem auch der Stößel angeordnet ist, wird von dem ersten Betätigungselement bedient, wodurch die erforderliche Vorspannkraft des Federelementes erzeugt wird.

Das Federelement des Energiespeichers kann als eine normale Druckfeder, Blattfeder oder Schenkelfeder oder dergleichen ausgestaltet sein, die in einem Sockel einseitig fest angeordnet ist. An dem freien Ende dieses Federelementes ist dann der Stößel angeordnet, welcher zusätzlich einen Mitnehmer aufweisen kann, der mit dem Sperrglied mechanisch zusammenwirkt. Sofern das Federelement als eine Schenkelfeder ausgestaltet ist, ist ein erster Schenkel frei beweglich, der mit dem ersten Betätigungselement zusammenwirkt. Insbesondere kann dieser erste Schenkel gleichzeitig mit dem Sperrglied formschlüssig zusammenwirkt, wofür der erste Schenkel einen abgewinkelten Bereich aufweist. Dieser abgewinkelte Bereich dient als Mitnehmer an dem Stößel, um mit dem Sperrglied mechanisch zusammen zu wirken.

Ferner ist die Erfindung auch auf ein Verfahren gemäß des Anspruchs 15 gerichtet, welches zum Betrieb einer Verriegelungsvorrichtung zur Verriegelung eines funktionswesentlichen Bauteils eines Fahrzeugs dient. Erfindungsgemäß ist bei diesem Verfahren vorgesehen, dass nur bei einem Sonderfall, in dem das Sperrglied eingeklemmt ist und die Energie des Energiespeichers nicht ausreicht, das Sperrglied aus der Verriegelungsposition zu bewegen, ein zweites Betätigungselement vorgesehen ist, durch welches der Energiespeicher beim Wechsel des Sperrglieds von der Verriegelungsposition in die Entriegelungsposition (Entriegelungsvorgang) unterstützt wird. Nur in diesem Sonderfall steht das zweite Betätigungselement in Wirkverbindung mit dem Sperrglied, wobei die übliche Wirkverbindung des ersten Betätigungselementes zwischen dem Energiespeicher aufgehoben ist.

Weitere Maßnahmen und Vorteile sowie technische Merkmale der Erfindung ergeben sich aus den Ansprüchen, der nachfolgenden Beschreibung und den Zeichnungen. In den nachstehenden Figuren ist die erfindungsgemäße Verriegelungsvorrichtung in einem Ausführungsbeispiel detailliert dargestellt. Es zeigen:
- Figur 1: eine dreidimensionale Ansicht von dem Energiespeicher, der Steuerwelle mit dem ersten und zweiten Betätigungselement und dem Sperrglied,
- Figur 2: eine weitere dreidimensionale Ansicht der Bauteile aus Figur 1 ohne das Sperrglied,
- Figur 3a: schematische Darstellungen von zwei Schnittzeichnungen durch die in Figur 1 gezeigten Bauteile, wobei das Sperrglied in der Verriegelungsposition la verharrt,
- Figur 3b: vergleichbare Schnittzeichnung zu Figur 3a, wobei jedoch das Sperrglied in einer Zwischenposition zwischen der Verriegelungs- und Entriegelungsposition verharrt,
- Figur 3c: vergleichbare Schnittzeichnung zu Figur 3a und 3b, wobei das Sperrglied beim Entriegelungsvorgang durch das funktionswesentliche Bauteil eingeklemmt ist,
- Figur 3d: vergleichbare Schnittzeichnungen zu Figuren 3a bis 3c, wobei das Sperrglied beim Verriegelungsvorgang auf das funktionswesentliche Bauteil trifft,
- Figur 4: dreidimensionale Ansicht der Verriegelungsvorrichtung ohne Gehäusedeckel,
- Figur 5: vergleichbare dreidimensionale Ansicht der Verriegelungsvorrichtung aus Figur 4, jedoch von einem anderen Blickwinkel, wobei das funktionswesentliche Bauteil ebenfalls dargestellt ist,
- Figur 6: dreidimensionale Ansicht der gesamten Verriegelungsvorrichtung im einbaufähigen Zustand.

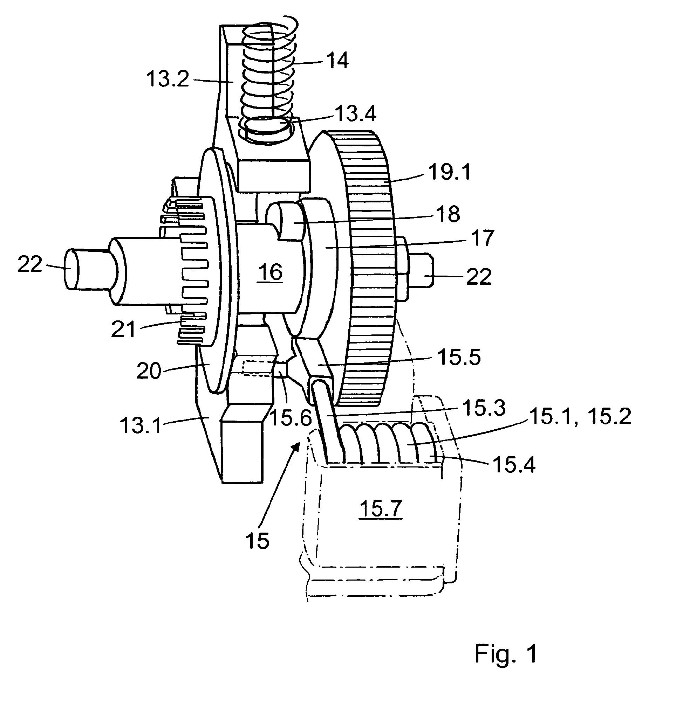

Die Figur 1 zeigt das mechanische Zusammenwirken der wesentlichen Elemente der erfindungsgemäßen Verriegelungsvorrichtung 10, wobei die wesentlichen Elemente einen Energiespeicher 15, eine Steuerwelle 16 mit einem ersten und zweiten Betätigungselement 17, 18 und ein Sperrglied 13 aufweisen. Zusätzlich ist an der Steuerwelle 16, die eine Drehachse 22 aufweist, ein Schneckenrad 19.1 sowie ein Drehgeber 21 und eine Schutzscheibe 20 angeordnet. Das erste und zweite Betätigungselement 17, 18 liegt zwischen dem Schneckenrad 19.1 und der Schutzscheibe 20, an der gleichzeitig der Drehgeber 21 vorgesehen ist. In dem Zwischenraum zwischen dem Schneckenrad 19.1 und der Schutzscheibe 20 ist ebenfalls das Sperrglied 13 mit seiner c-förmigen Ausnehmung 13.3 angeordnet, wobei dieses nicht fest mit der Steuerwelle 16 oder dem ersten und zweiten Betätigungselement 17, 18 befestigt ist. Vielmehr wirkt die Steuerwelle 16 durch das erste und zweite Betätigungselement 17, 18 auf das Sperrglied 13 ein, wobei das Sperrglied 13 die c-förmige Ausnehmung 13.3 aufweist, in der die beiden Betätigungselemente 17, 18 freidrehbar angeordnet sind und je nach Funktionsweise von innen über die c-förmige Ausnehmung 13.3 auf das Sperrglied 13 drücken. Zu diesem Zweck sind die Betätigungselemente 17, 18 nockenförmig ausgestaltet, um je nach Drehwinkel bzw. Drehstellung entsprechend auf das Sperrglied 13 mechanisch wirken zu können. In der Figur 1 ist das erste Betätigungselement 17 direkt links neben dem Schneckenrad 19.1 angeordnet, an das sich das zweite Betätigungselement 18 ebenfalls links neben dem ersten Betätigungselement 17 anfügt. Die Steuerwelle 16 ist im vorliegenden Fall einteilig zum Schneckenrad 19.1, dem erstes Betätigungselement 17, dem zweiten Betätigungselement 18 und der Schutzscheibe 20 mit dem Drehgeber 21 ausgestaltet. Ebenfalls ist es denkbar, dass diese Steuerwelle 16 mehrteilig aufgebaut ist, wobei so die Verbindung zwischen den vorgenannten Elementen drehfest ausgestaltet sein muss.

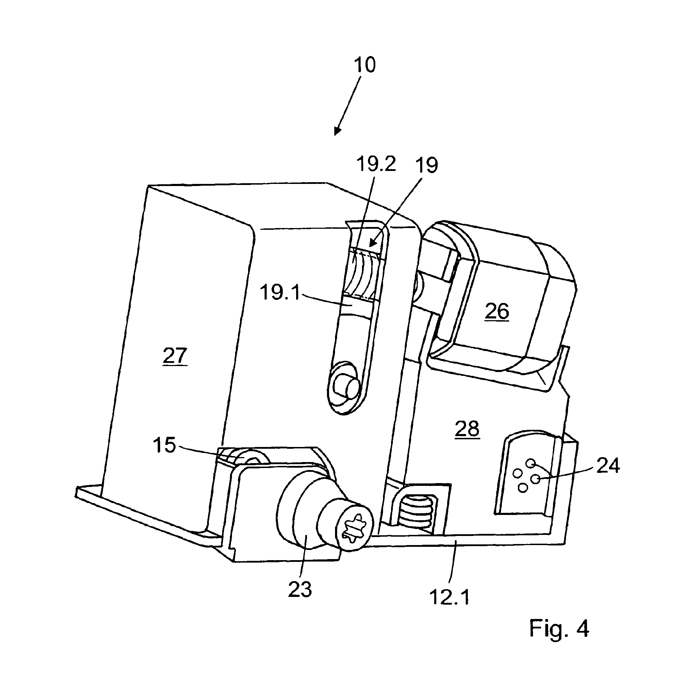

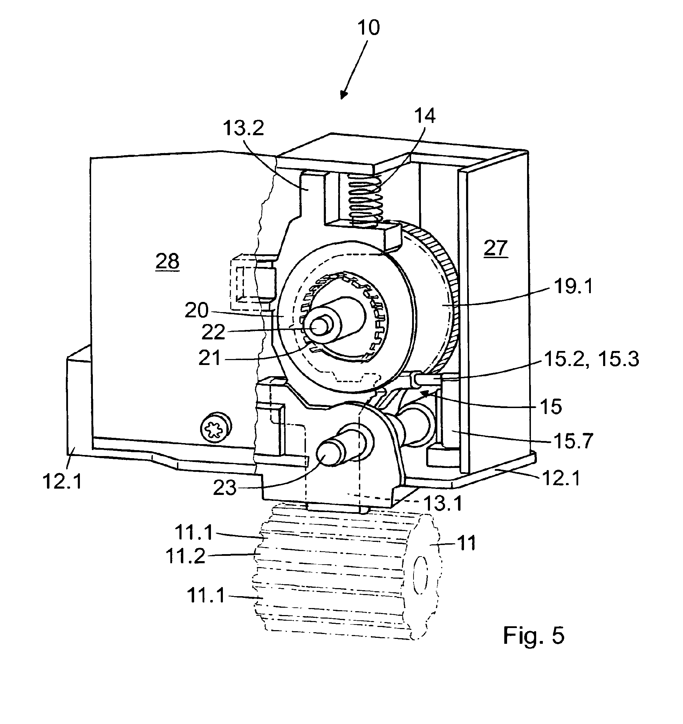

Wie der Figur 1 weiter zu entnehmen ist, wirkt auf das Sperrglied 13, welches ein vorderes Ende 13.1 und ein hinteres Ende 13.2 aufweist, eine Feder 14, die als Druckfeder ausgestaltet ist. Die Feder 14 kann selbst formschlüssig mit dem Sperrglied 13 verbunden sein, wozu eine Halterung 13.4 vorgesehen sein kann. Diese Halterung 13.4 kann aus einer Ausnehmung und/oder einem Vorsprung bestehen, der formschlüssig mit der Feder 14 zusammenwirkt. Das vordere Ende 13.1 des Sperrgliedes 13 greift in der Verriegelungsposition la formschlüssig in ein funktionswesentliches Bauteil 11 eines Fahrzeuges ein, um somit das funktionswesentliche Bauteil 11 zu arretieren. Ebenfalls ist es denkbar, dass auch von dem Sperrglied 13 eine kraftschlüssige Arretierung auf das funktionswesentliche Bauteil ausgeht. Sofern das funktionswesentliche Bauteil 11 verriegelt ist, ist ein Betrieb des Fahrzeuges nicht mehr möglich. An dem gegenüberliegenden vorderen Ende 13.1 ist das hintere Ende 13.2 des Sperrgliedes 13 angeordnet, welches z. B. als ein Anschlagselement ausgestaltet ist, um den Stellweg des Sperrgliedes 13 zu beschränken. Zu diesem Zweck kann das hintere Ende 13.2 z. B. mit dem Gehäuse 12 oder einem ersten Halterungselement 27 (siehe Figur 4 und 5) der Verriegelungsvorrichtung 10 zusammenwirken.

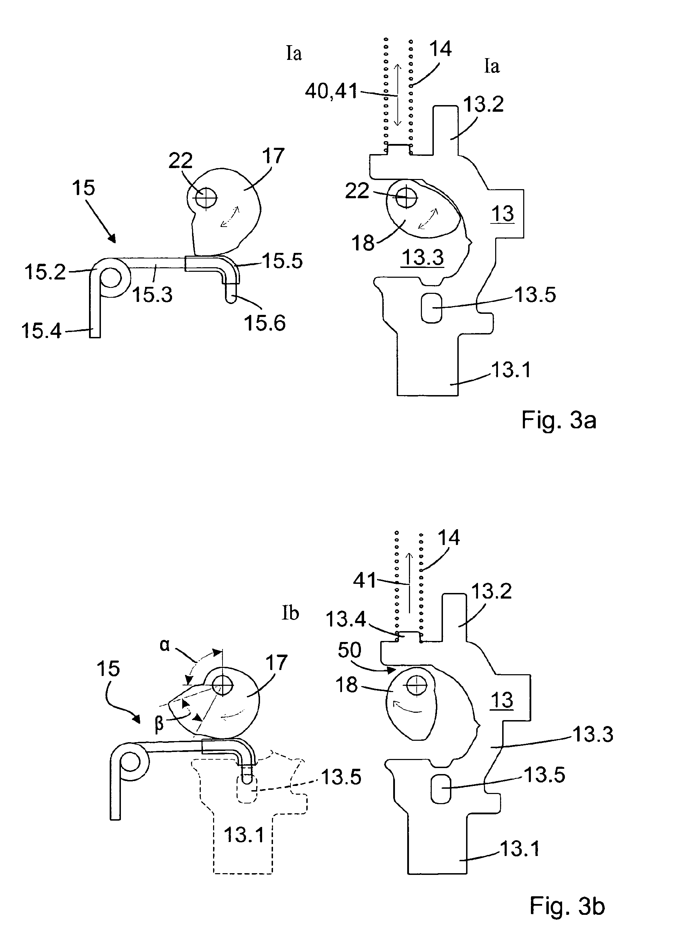

Weiter ist aus der Figur 1 ersichtlich, dass eine Betätigung des Sperrgliedes 13 nicht direkt über die Steuerwelle 16 beim Verriegelungsvorgang stattfindet, sondern dass vielmehr das erste Betätigungselement 17 über den bereits erwähnten Energiespeicher 15, insbesondere einem Mitnehmer 15.6, auf das Sperrglied 13 einwirkt. Zu diesem Zweck weist der Energiespeicher 15 ein Federelement 15.1 auf, welches im vorliegenden Fall als eine Schenkelfeder 15.2 dargestellt ist. Die Schenkelfeder 15.2 ist in einem Sockel 15.7 gelagert (welcher in der Figur 1 gestrichelt dargestellt ist), wobei ein erster, freier Schenkel 15.3 der Schenkelfeder 15.2 aus dem Sockel 15.7 herausragt und ein zweiter, arretierter Schenkel 15.4 in dem Sockel 15.7 angeordnet ist. Hierdurch ist die Schenkelfeder 15.2 eingeklemmt und kann an dem ersten, freien Schenkel 15.3 die erforderliche Federkraft für den Energiespeicher 15 aufbauen bzw. bereitstellen. An dem freien Schenkel 15.3 ist im vorliegenden Fall ein Stößel 15.5 vorgesehen, der mit dem ersten Betätigungselement 17 mechanisch zusammenwirkt. Dabei wird der Stößel 15.5 von dem ersten Betätigungselement 17 beim Verriegelungsvorgang niedergedrückt. Damit die Verriegelung des funktionswesentlichen Bauteils 11 stattfindet, wirkt der Energiespeicher 15 über den freien Schenkel 15.3 auf das Sperrglied 13. Zu diesem Zweck ist an dem freien Schenkel 15.3 ein Mitnehmer 15.6 vorgesehen, der im vorliegenden Fall aus einem abgewinkelten Bereich des freien Schenkels 15.3 besteht. Dieser Mitnehmer 15.6 greift in eine seitliche Aufnahme 13.5 des Sperrgliedes 13 ein, wodurch eine formschlüssige Verbindung zwischen dem Energiespeicher 15 und dem Sperrglied 13 vorhanden ist. Aus den Figuren 3b bis 3d geht das mechanische Zusammenwirken zwischen dem Energiespeicher 15 und dem Sperrglied 13, insbesondere über die langlochartige Aufnahme 13.5 hervor. In dieser langlochartigen Aufnahme 13.5 ist der Mitnehmer 15.6 formschlüssig angeordnet, wobei ein Spiel 52 durch die besondere Form der Aufnahme 13.5 vorgesehen sein kann.

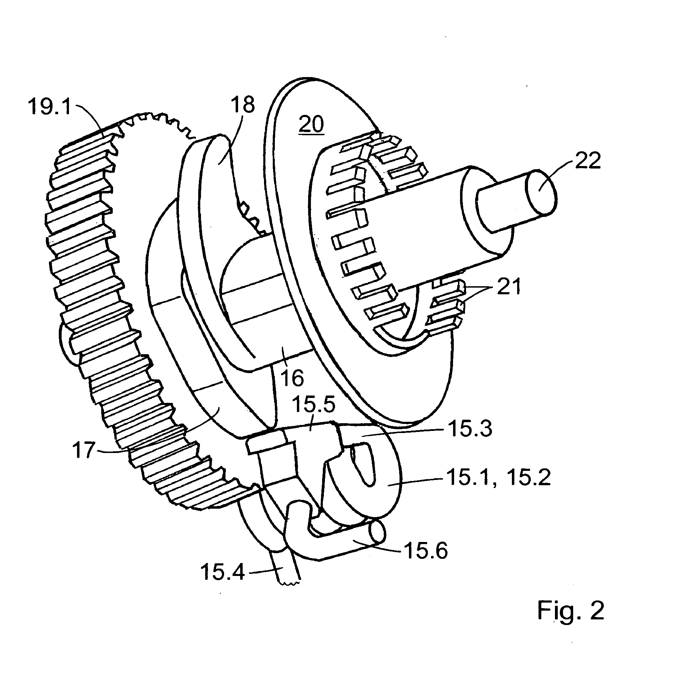

In der Figur 2 ist deutlich erkennbar, wie das erste Betätigungselement 17 mit dem Energiespeicher 15, insbesondere dem freien Schenkel 15.3 und dem Stößel 15.4 zusammenwirkt. Zu diesem Zweck wurde in der dreidimensionalen Ansicht der Steuerwelle 16 und der Schenkelfeder 15.2 das Sperrglied 13 weggelassen, welches mit einer c-förmigen Ausnehmung 13.3 in dem Zwischenraum der Steuerwelle 16 zwischen dem Schneckenrad 19.1 und der Schutzscheibe 20 angeordnet ist. Im Vergleich zur Figur 1 wurde nicht nur das Sperrglied 13, sondern auch der Sockel 15.7 des Energiespeichers 15 weggelassen. Des Weiteren zeigt die Figur 2 die Steuerwelle 16 und den Energiespeicher 15 im Vergleich zur Figur 1 nunmehr von links unten, wobei es sich jedoch um die identischen Elemente handelt. Aus der Figur 2 wird sichtbar, dass das erste nockenförmig ausgestaltete Betätigungselement 17 mit seiner Außenkontur von oben auf den Stößel 15.5 des Energiespeichers 15 mechanisch einwirkt. Dabei wird der Energiespeicher 15 bei einem Verriegelungsvorgang, der von der Entriegelungsposition in die Verriegelungsposition stattfindet, aufgeladen, in dem das Federelement 15.1 vorgespannt wird. Im vorliegenden Fall wird der freie Schenkel 15.3 durch das erste Betätigungselement 17 niedergedrückt, wodurch die Federspannung steigt und die Rückstellkraft der Feder erhöht wird. Beim Entriegelungsvorgang, der von der Verriegelungsposition in die Entriegelungsposition des Sperrgliedes 13 stattfindet, wirkt das Federelement 15.1 auf das erste Betätigungselement 17 mechanisch ein, in dem es darauf drückt. Gleichzeitig wirkt der Energiespeicher 15 über den Mitnehmer 15.6, welches mit der Aufnahme 13.5 formschlüssig verbunden ist, auf das Sperrglied 13, um dieses nach oben in die Entriegelungsposition zu bewegen. Ein Hochschnacken des Sperrgliedes 13 wird dadurch verhindert, dass der Stößel 15.5 von dem ersten Betätigungselement 17 gehalten wird und kontinuierlich durch eine Drehung im Gegenuhrzeigersinn (bezogen auf Figur 2) der Steuerwelle 16 stattfindet. Somit wird das Sperrglied 13 kontinuierlich durch den Energiespeicher 15 und das erste Betätigungselement 17 der Verriegelungsposition la in die Entriegelungsposition Ib überführt.

In der Figur 2 ist der Drehgeber 21 deutlich sichtbar, der beispielsweise mit einem optischen Sensor zusammenwirkt. Hierdurch lässt sich die exakte Drehposition bzw. Drehstellung der Steuerwelle 16 mit den entsprechenden Betätigungselementen 17, 18 erfassen, wobei diese Signale an eine Steuereinheit der Verriegelungsvorrichtung 10 weitergegeben werden können. Anhand dieser Signale kann der Antrieb 26, der einen Elektromotor aufweist, gesteuert werden. Ebenfalls kann der Drehgeber 21 auch mit einem Hall-Sensor oder einem anderen Sensorelement zusammenwirken. Die in der Figur 2 gestellte Schutzscheibe 20 der Steuerwelle 16 kann optional vorgesehen sein. Im vorliegenden Fall dient die Schutzscheibe 20 als Schutz für den Zwischenraum der Steuerwelle 16 und gleichzeitig zur Befestigung des Drehgebers 21. Allerdings ist es auch denkbar, dass der Drehgeber 21 direkt an der Steuerwelle 16 angeordnet ist. Ebenfalls kann der Drehgeber 21 auch an dem Schneckenrad 19.1 vorgesehen sein.

In den Figuren 3a bis 3d ist die Funktionsweise und das Zusammenspiel des Energiespeichers 15, des ersten und zweiten Betätigungselementes 17, 18 und dem Sperrglied 13 verdeutlicht. Dabei handelt es sich um Schnittzeichnungen, durch die zuvor genannten Elemente, wobei auf alle weiteren Elemente der Verriegelungsvorrichtung 10 verzichtet worden ist, um das Zusammenwirken deutlich herauszustellen. In den Figuren 3a bis 3d sind jeweils zwei Schnittzeichnungen (siehe linke und rechte Abbildung) durch das erste und das zweite Betätigungselement 17, 18 dargestellt, wobei die Schnitte orthogonal zur Drehachse 22 der Steuerwelle 16 verlaufen. In den linken Abbildungen in den Figuren 3a bis 3d ist der Schnitt durch das erste Betätigungselement 17 gelegt worden, wobei in den rechten Abbildungen der weitere Schnitt - parallel zum ersten Schnitt - durch das zweite Betätigungselement 18 verläuft. In allen Figuren 3a bis 3d ist die Feder 14 schematisch dargestellt, jedoch ohne das obere Widerlager, welches durch das erste Halterungselement 27 oder das Gehäuse 12 gebildet werden kann. Die Feder 14 erzeugt insgesamt einen Druck auf das Sperrglied 13, wodurch das Sperrglied 13 grundsätzlich in Richtung des Pfeils 40 in die Verriegelungsposition la gedrückt wird. In den Figuren 3b bis 3d ist in den linken Abbildungen zusätzlich das Sperrglied 13 angedeutet worden, um die Funktionsweise besser erläutern zu können.

Der Verriegelungsvorgang des Sperrglieds 13 findet durch eine Drehung der Steuerwelle 16 im Gegenuhrzeigersinn statt. Der Entriegelungsvorgang des Sperrglieds 13 wird hingegen durch eine Drehung der Steuerwelle 16 im Uhrzeigersinn erreicht. Beide zuvor genannten Drehrichtungen beziehen sich nur auf die Figuren 3a bis 3d.

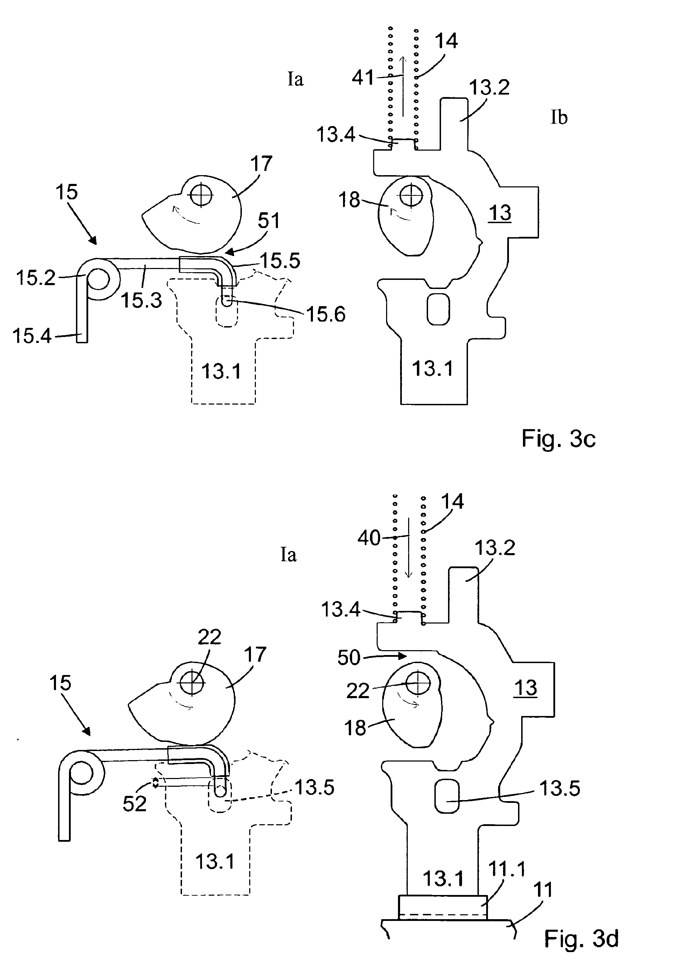

In der Figur 3a befindet sich das Sperrglied 13 in der Verriegelungsposition la. Dabei ist der Energiespeicher 15 maximal aufgeladen, so dass er die maximale Rückstellkraft für das Sperrglied 13 bereithält. In diese Verriegelungsposition la ist das Sperrglied 13 durch eine Drehung der Steuerwelle 16 im Gegenuhrzeigersinn gelangt. Folglich wurden auch das erste und zweite Betätigungselement 17, 18 im Gegenuhrzeigersinn gedreht, um in die Verriegelungsposition la zu gelangen (siehe Drehrichtungspfeile auf den Betätigungselementen 17, 18). Da das Sperrglied 13 grundsätzlich durch die Feder 14 in Richtung des Pfeils 40, d. h. nach unten, gedrückt wird, bewegt es sich auch grundsätzlich in die Verriegelungsposition la sofern dieses möglich ist. Die Bewegung des Sperrgliedes 13 wird allerdings durch den Energiespeicher 15 und das zweite Betätigungselement 18 eingeschränkt. Im Normalfall kann beim Verriegelungsvorgang das Sperrglied 13 nur soweit durch die Feder 14 hinuntergedrückt werden, wie es der Energiespeicher 15 zulässt. Der Energiespeicher 15 wird durch das erste Betätigungselement 17 gesteuert, in dem die nockenförmige Außenkontur des ersten Betätigungselementes 17 auf den Stößel 15.5 drückt, wodurch insgesamt der freie Schenkel 15.3 in Richtung des Pfeils 40, d. h. nach unten, gedrückt wird. Folglich wirkt die Federkraft des Energiespeichers 15 beim Verriegelungsvorgang nicht direkt auf das Sperrglied 13, sondern vielmehr auf das erste Betätigungselement 17. Somit kann das Sperrglied 13 der Druckkraft der Feder 14 in Pfeilrichtung 40 folgen, bis das Sperrglied 13 mit seiner Aufnahme 13.5 an den Mitnehmer 15.6 des Energiespeichers 15 stößt. Da die Federkraft des Energiespeichers 15 deutlich größer ist als die Federkraft der Feder 14, kann die Feder 14 das Sperrglied 13 nicht gegen die Federkraft des Energiespeichers 15 bewegen. In der Figur 3a ist der Normalfall beim Verriegelungsvorgang dargestellt, wohingegen in der Figur 3d ein Sonderfall gezeigt ist, in dem das Sperrglied 13 auf einen Nocken 11.1 des funktionswesentlichen Bauteils 11 stößt und nicht in die endgültige Verriegelungsposition la verfahren kann.

In der Figur 3d ist der Verriegelungsvorgang der Verriegelungsvorrichtung 10 gezeigt, wenn es in einem Sonderfall auf das funktionswesentliche Bauteil 11 trifft. Dabei wird die Steuerwelle 16 für ein Getriebe 19 im Gegenuhrzeigersinn gedreht, woraufhin auch das erste und zweite Betätigungselement 17, 18 dieser Drehrichtung folgen. Wie immer drückt die Feder 14 das Sperrglied 13 in Richtung des Pfeils 40 herunter, so dass es der Bewegung des Mitnehmers 15.6 des Energiespeichers 15 folgen kann. Der Mitnehmer 15.6 des Energiespeichers 15 wird ebenfalls durch das erste Betätigungselement 17 in Richtung des Pfeils 40 nach unten gedrückt, so dass grundsätzlich das Sperrglied 13 dieser Bewegung folgen kann. Allerdings trifft im dargestellten Sonderfall in der Figur 3d das Sperrglied 13 mit seinem vorderen Ende 13.1 auf einen herausragenden Nocken 11.1 des funktionswesentlichen Bauteils 11, so dass die weitere Abwärtsbewegung des Sperrgliedes 13 verhindert wird. Um einen zerstörungsfreien Ablauf der Verriegelungsvorrichtung 10 in diesem Sonderfall zu ermöglichen, ist ein Spiel 52 zwischen dem Energiespeicher 15 und dem Sperrglied 13 vorgesehen. Dieses Spiel 52 wird durch die langlochartige Aufnahme 13.5, die seitlich in dem Sperrglied 13 vorgesehen ist, ermöglicht, in die der Mitnehmer 15.6 formschlüssig eingreift. Wie in der linken Abbildung der Figur 3d erkennbar ist, ist das Spiel 52 zwischen dem Energiespeicher 15 und dem Sperrglied 13 deutlich sichtbar. Dabei liegt die Aufnahme 13.5 des Sperrgliedes 13 nicht an dem Mitnehmer 15.6 an, da das Sperrglied 13 eben nicht der Abwärtsbewegung durch die Feder 14 folgen kann, da es auf den Nocken 11.1 des funktionswesentlichen Bauteils 11 gestoßen ist, siehe rechte Abbildung in Figur 3d. Eine weitere Drehung der Steuerwelle 16 bzw. des ersten Betätigungselementes 17 im Gegenuhrzeigersinn bewirkt, dass der Mitnehmer 15.6 weiter nach unten gedrückt wird, wodurch sich auch das Spiel 52 vergrößert. Erreicht das erste Betätigungselement 17 seine endgültige Drehstellung für die Verriegelungsposition la (siehe linke Abbildung in Figur 3a), so ist der Mitnehmer 15.6 maximal nach unten ausgelenkt, wodurch auch das Spiel 52 maximal ist. Ebenfalls vergrößert sich ein Spiel 50 zwischen dem zweiten Betätigungselement 18 und dem Sperrglied 13, wie in der rechten Abbildung der Figur 3d dargestellt ist. Auch dieses Spiel 50 wird in dem dargestellten Sonderfall der Figur 3d maximal ausgebildet.

Durch eine Bewegung des funktionswesentlichen Bauteils 11 kann erreicht werden, dass der Nocken 11.1 weggedreht wird, so dass das vordere Ende 13.1 des Sperrgliedes 13 nicht mehr auf die Spitze des Nockens 11.1 trifft. Vielmehr kann nunmehr das vordere Ende 13.1 in eine Ausnehmung 11.2 zwischen zwei Nocken 11.1 des funktionswesentlichen Bauteils 11 eindringen, wodurch sich die endgültige Verriegelungsposition la, wie in Figur 3a dargestellt, ergibt. Dabei wirkt die Feder 14 immer noch auf das Sperrglied 13 und drückt dieses nach der Freigabe durch den Nocken 11.1 in die Ausnehmung 11.2 des funktionswesentlichen Bauteils 11 hinein. Da der Mitnehmer 15.6 des Energiespeichers 15 ebenfalls niedergedrückt ist und das Spiel 52 zum Sperrglied 13 aufweist, wird das Sperrglied 13 nicht durch den Mitnehmer 15.6 blockiert. Folglich kann das Sperrglied 13 seine endgültige Verriegelungsposition la (wie in Figur 3a dargestellt) einnehmen. In diesem Fall liegt dann das Sperrglied 13 mit seiner Aufnahme 13.5 an dem Mitnehmer 15.6 des Energiespeichers 15 an, so dass kein Spiel 52 vorhanden ist.

In der Figur 3b ist der Verriegelungsvorgang des Sperrgliedes 13 zur Entriegelungsposition lb dargestellt. Allerdings hat das Sperrglied 13 noch nicht die endgültige Entriegelungsposition lb erreicht, so dass es weiterhin in Richtung des Pfeils 41, das heißt nach obenhin, entgegen der Federkraft 14 bewegt wird. Dabei wird das Sperrglied 13 ausschließlich durch den Energiespeicher 15 entgegen der Federkraft 14 hoch gedrückt. Im Entriegelungsvorgang entlädt sich der Energiespeicher 15 kontinuierlich, in dem er der nockenförmigen Außenkontur des ersten Betätigungselementes 17 folgt. Das erste Betätigungselement 17 wird hierbei im Uhrzeigersinn gedreht, wodurch der Abstand des freien Schenkels 15.3 und der Achse 22 durch die schneckenförmige Ausgestaltung des ersten Betätigungselementes 17 reduziert wird. Folglich kann sich der freie Schenkel 15.3 in Richtung des Pfeils 41 nach oben bewegen, da das erste Betätigungselementes 17 den

Weg aufgrund der schneckenförmigen Kontur freigibt. Dabei wirkt der Mitnehmer 15.6 auf das Sperrglied 13 und zieht dieses in Richtung des Pfeils 41 in die Entriegelungsposition lb. Somit braucht von dem Antrieb 26 der Verrieglungsvorrichtung 10 keine Energie bereitgestellt werden, um im Normalfall den Entriegelungsvorgang des Sperrgliedes 13 zu bewirken. Vielmehr folgt das Sperrglied 13 der Bewegung des Energiespeichers 15, die durch das erste Betätigungselement 17 gesteuert wird. Durch diese kontinuierliche Rückführung des Sperrgliedes 13 entlang der Außenkontur des ersten Betätigungselementes 17 werden die lauten Knallgeräusche beim Entriegelungsvorgang lb der erfindungsgemäßen Verriegelungsvorrichtung 10 vermieden. Ferner ist in diesem Normalfall, der in der Figur 3b dargestellt ist, immer ein Spiel 50 zwischen dem Sperrglied 13 und dem zweiten Betätigungselement 18 vorgesehen. Dieses Spiel 50 beträgt wenige zehntel bis ganze Millimeter und ist im Normalfall im Wesentlichen konstant. Wenn der Abstand zwischen dem freiem Schenkel 15.3 und der Achse 22 minimal ist, hat das Sperrglied 13 seine Entriegelungsposition lb erlangt.

In dem dargestellten Fall von Figur 3b muss hierzu die Steuerwelle 16 mit den beiden Betätigungselementen 17, 18 noch eine Drehung im Uhrzeigersinn von ungefähr 180° nachvollziehen. Wie weiter anhand der Außenkontur des Betätigungselementes 17 zu erkennen ist, ermöglicht das erste Betätigungselement 17 einen Nachlauf des Antriebs 26 von ca. 90°, bezogen auf die Drehstellung des ersten Betätigungselementes 17 bzw. der Steuerwelle 16. Der entsprechende Nachlaufbereich bei der Entriegelungsposition lb ist in der Figur 3b als Winkelbereich α dargestellt. In diesem Bereich ist der Abstand zwischen dem Energiespeicher 15 und der Achse 22 konstant. In diesem Winkelbereich α verharrt das Sperrglied 13 in seiner Entriegelungsposition. Ebenfalls ist der Nachlaufbereich des Antriebs 26 für die Verriegelungsposition la in der linken Abbildung der Figur 3b als Winkelbereich β dargestellt. In diesem Winkelbereich ist der Abstand zwischen dem Energiespeicher 15, insbesondere des Stößels 15.5, und der Achse 22 durch die Außenkontur des ersten Betätigungselementes 17 maximal. Der Winkelbereich β weist einen ungefähren Winkel von ungefähr 45° auf und liegt in der Regel zwischen 30° und 60°.

In der Figur 3 c ist der Sonderfall dargestellt, in dem das Sperrglied 13 mit seinem vorderen Ende 13.1 durch das funktionswesentliche Bauteil 11 in der Verriegelungsposition la eingeklemmt ist. Ausgehend von der dargestellten Verriegelungsposition la in der Figur 3a wurde das erste Betätigungselement 17 im Uhrzeigersinn gedreht, wodurch der Entriegelungsvorgang stattfindet. In dem dargestellten Sonderfall der Figur 3c wird davon ausgegangen, dass die Rückstellkraft des aufgeladenen Energiespeichers 15 nicht ausreicht, um das eingeklemmte Sperrglied 13 aus der Verriegelungsposition la in die Entriegelungsposition lb zu überführen. Das erste Betätigungselement 17 wurde genau so weit - wie in der Figur 3b dargestellt - im Uhrzeigersinn aus der ursprünglichen Verriegelungsposition la aus Figur 3a gedreht. Allerdings bildet sich ein Spiel 51 zwischen dem Energiespeicher 15 und dem ersten Betätigungselement 17, so dass in diesem Sonderfall kein Kontakt zwischen dem Energiespeicher 15 und dem ersten Betätigungselement 17 vorliegt. Um trotzdem den Entriegelungsvorgang ordnungsgemäß durchführen zu können, setzt nunmehr die Funktion des zweiten Betätigungselementes 18 ein. Das normalerweise vorgesehene Spiel 50 zwischen dem zweiten Betätigungselement 17 und dem Sperrglied 13 ist in dem vorliegenden Sonderfall aus Figur 3c nicht mehr vorhanden, so dass nunmehr das zweite Betätigungselement 18 mit seiner nockenförmigen Steuerkontur an der Innenfläche der c-förmigen Ausnehmung 13.3 des Sperrgliedes 13 anliegt. Eine weitere Drehung der Steuerwelle 16 im Uhrzeigersinn führt dazu, dass das zweite Betätigungselement 18 zusätzlich zur aufgebrachten Kraft des Energiespeichers 15 auf das Sperrglied 13 in Richtung des Pfeils 41, d. h. nach oben, wirkt, wodurch insgesamt die erforderlichen Kräfte aufgebracht werden, um das eingeklemmte Sperrglied 13 aus dem funktionswesentlichen Bauteil 11 zu befreien. Wie in der rechten Abbildung der Figur 3c zu erkennen ist, nimmt der Abstand - bei einer Drehung im Uhrzeigersinn - zwischen der Achse 22 und dem Sperrglied 13 nach obenhin langsam zu, wodurch ein großes Drehmoment für eine hohe Rückstellkraft durch das zweite Betätigungselement 18 sorgt.

Sobald das eingeklemmte Sperrglied 13 aus der Verriegelungsposition la gelöst worden ist, reicht die Rückstellkraft des aufgeladenen Energiespeichers 15 aus, um das Sperrglied 13 alleine zur Entriegelungsposition lb zu überführen. Somit vollzieht das Sperrglied 13 einen kleinen Sprung sobald es freigegeben wird, wobei der Sprung durch die Größe des vorhandenen Spiels 51 zwischen dem ersten Betätigungselement 17 und dem Energiespeicher 15 vorgegeben ist. Nach dem Sprung berührt der Energiespeicher 15 mit seinem Stößel 15.5 wieder die schneckenförmige Außenkontur des ersten Betätigungselementes 17, so dass eine kontinuierliche, sprungfreie Führung des Sperrgliedes 13 beim Entriegelungsvorgang vorgegeben ist. Da das Spiel 51 zwischen dem Energiespeicher 15 und dem ersten Betätigungselement 17 nur wenige zehntel Millimeter bis ganze Millimeter umfasst, werden ebenfalls in diesem Sonderfall laute Knallgeräusche durch das sprunghaft bewegte Sperrglieder 13 vermieden. Nachdem der Energiespeicher 15 wieder in Kontakt mit dem ersten Betätigungselement 17 ist, findet der gewöhnliche Entriegelungsvorgang statt, wie es auch im Normalfall gegeben ist.

Wie in der Figur 3a zu erkennen ist, ist weder ein Spiel 50 zwischen dem zweiten Betätigungselement 18 und dem Sperrglied 13 noch ein Spiel 51 zwischen dem ersten Betätigungselement 17 und dem Energiespeicher 15 sowie auch das Spiel 52 vorhanden. In der Verriegelungsposition la kann auch das weitere Spiel 52 zwischen dem Energiespeicher 15 und dem Sperrglied 13 fehlen.

Die Figur 4 offenbart die vollständige Verriegelungsvorrichtung 10 ohne den Gehäusedeckel. Der Gehäusedeckel bildet mit der Halteplatte 12.1 das Gehäuse 12, wobei eine Ansteuerung, der im vorliegenden Fall elektrisch angetriebenen Verriegelungsvorrichtung 10, durch die Steckverbindung 24 erfolgen kann. Bei einer rein mechanisch betriebenen Verriegelungsvorrichtung 10 kommt zusätzlich ein Zylinderschloss zum Einsatz, durch den der mechanische Antrieb für das Sperrglied 13 erzeugt wird. Die Verriegelungsvorrichtung 10 wird am Fahrzeug durch mindestens einen Befestigungsbolzen 23 befestigt, wobei dieser Befestigungsbolzen 23 nur im eingebauten Zustand der Verriegelungsvorrichtung 10 entfernbar ist, wenn das Sperrglied 13 in der Entriegelungsposition lb angeordnet ist. In dieser Entriegelungsposition lb ist auch die Verriegelungsvorrichtung 10 montierbar. Ansonsten wird der Befestigungsbolzen 23 formschlüssig durch die Verriegelungsvorrichtung 10, insbesondere das Sperrglied 13, arretiert. Hierdurch wird sichergestellt, dass die Verriegelungsvorrichtung 10 nicht in der Verriegelungsposition la von dem Fahrzeug entfernt werden kann. Der Befestigungsbolzen 23 kann ebenfalls mit der Halteplatte 12.1, insbesondere einem verstärkten Teil davon, mechanisch zusammen wirken.

Die in den Figuren 1 und 2 dargestellten Elemente werden unter anderem durch das erste Halterungselement 27 verdeckt, welches innerhalb der Verriegelungsvorrichtung 10 angeordnet ist. Deutlich ist in der Figur 4 der elektrische Motor 26 abgebildet, der einen Antrieb 26 für die elektrische Verriegelungsvorrichtung 10 darstellt. An der Motorwelle 26 ist ein Antriebsritzel 19.2 angeordnet, welches mit dem Schneckenrad 19.1 zusammenwirkt und das Getriebe 19 bildet. Das Getriebe 19 ist selbst als Schneckengetriebe ausgestaltet und weist eine selbsthemmende Wirkung auf, so dass eine Drehbewegung nur vom Antriebsritzel 19.2 auf das Schneckenrad 19.1 übertragbar ist. Eine umgekehrte Drehbewegung von dem Schneckenrad 19.1 auf das Antriebsritzel 19.2 kann durch die selbsthemmende Wirkung nicht erfolgen. Das erste Halterungselement 26 kann gleichzeitig eine Lagerung für Steuerwelle 16, insbesondere die Achse 22, bilden. Ebenfalls ist in der Figur 4 noch ein Teil des Energiespeichers 15 dargestellt, wobei im Wesentlichen die Wicklungen der Schenkelfeder 15.2 sichtbar sind.

In der Figur 5 ist eine weitere Seitenansicht der dargestellten Verriegelungsvorrichtung 10 aus der Figur 4 sichtbar. Auch hier verdeckt das erste Halterungselement 27 einen wesentlichen Teil der Verriegelungsvorrichtung 10. Zusätzlich ist ein zweites Halterungselement 28 vorhanden, welches auch zur Halterung der weiteren Elemente innerhalb der Verriegelungsvorrichtung 10 dient. Folglich wird durch dieses zweite Halterungselement 28 auch der Einblick auf diese Elemente erschwert. Um den konstruktiven Aufbau der Verriegelungsvorrichtung 10 besser nachvollziehen zu können, wurde das komplette Sperrglied 13 in dem eigentlich nicht sichtbaren Teil gestrichelt dargestellt. Nur im Bereich des hinteren Endes 13.2 ist das Sperrglied 13 in dieser Darstellung aus Figur 5 sichtbar. Dabei ist erkennbar, wie sich die Feder 14 an dem ersten Halterungselement 27 abstützt. Ebenfalls kann die Anschlagsfunktion des hinteren Endes 13.2 des Sperrgliedes 13 in dieser Darstellung nachvollzogen werden. Der übrige Teil des Sperrgliedes 13 wird von der Steuerwelle 16 bzw. Schutzscheibe 20 und der Halteplatte 12.1 verdeckt. Zur besseren Übersicht, ist in der Figur 5 auch das funktionswesentliche Bauteil 11 mit seinem Zahnkranz, der aus Nocken 11.1 und Ausnehmung 11.2 zwischen den Nocken 11.1 besteht, dargestellt. In der Figur 5 ist das Sperrglied 13 in seiner Verriegelungsposition la, wodurch das funktionswesentliche Bauteil 11 formschlüssig arretiert ist. Der Energiespeicher 15 ist mit seinem Sockel 15.7, der an der Halteplatte 12.1 befestigt ist, sichtbar. Dabei ragt der freie Schenkel 15.3 aus dem Sockel 15.7 heraus, um mit dem ersten Betätigungselement 17 mechanisch zusammenwirken zu können.

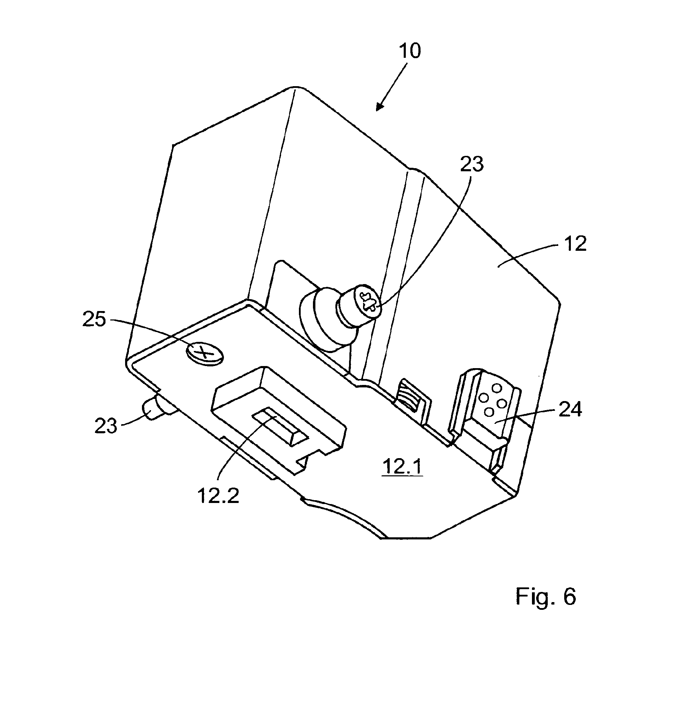

In der Figur 6 ist die komplette Verriegelungsvorrichtung 10 ohne das funktionswesentliche Bauteil 11 dargestellt. Der Gehäusedeckel des Gehäuses 12 wird von unten durch eine Schraube 25, die durch die Halteplatte 12.1 greift, gesichert. Somit ist auch der Gehäusedeckel nur entfernbar, wenn die Verriegelungsvorrichtung 10 nicht an dem funktionswesentlichen Bauteil 11 montiert ist. Ansonsten ist die Schraube 25 nicht zugänglich. In der Halteplatte 12.1 ist eine Gehäuseöffnung 12.2 vorgesehen, die im Wesentlichen einen rechteckförmigen Querschnitt aufweist. Durch diese Gehäuseöffnung 12.2 ragt das Sperrglied 13 in der Verriegelungsposition la heraus. Zur Erhöhung der Stabilität der Verriegelungsvorrichtung 10 ist die Gehäuseöffnung 12.2 mit einer quaderförmigen Verstärkung an der Halteplatte 12.1 angeordnet. Ebenfalls ist die Steckverbindung 24 von außen zugänglich.

Abschließend ist noch zu erwähnen, dass das hier dargestellte Ausführungsbeispiel der erfindungsgemäßen Verriegelungsvorrichtung 10 nur eine Lösung für die Erfindung darstellt. So kann z. B. der Energiespeicher 15 problemlos auch eine Drehfeder oder Blattfeder oder dergleichen als Federelement 15.1 aufweisen. Auch kann anstelle des Schneckengetriebes 19 jedes andere Getriebe oder ein direkter Antrieb der Steuerwelle 16 erfolgen. Ebenfalls ist es nicht notwendig, dass die Steuerwelle 16 einteilig ausgestaltet ist. Folglich ist eine beliebige Kombination der beschriebenen technischen Merkmale der erfindungsgemäßen Verriegelungsvorrichtung mit einander denkbar, sofern sie sich technisch nicht ausschließen.

### Bezugszeichenliste

- 10: Verriegelungsvorrichtung
- 11: funktionswesentliches Bauteil
- 11.1: Nocken
- 11.2: Ausnehmung
- 12: Gehäuse
- 12.1: Halteplatte von 12
- 12.2: Gehäuseöffnung in 12 für 13

- 13: Sperrglied
- 13.1: vorderes Ende / Sperrzapfen für 11
- 13.2: hinteres Ende
- 13.3: Ausnehmung, c-förmig
- 13.4: Halterung für 14
- 13.5: Aufnahme für 15

- 14: Feder für 13
- 15: Energiespeicher
- 15.1: Federelement (z. B. Drehfeder / Blattfeder etc.)
- 15.2: Schenkelfeder
- 15.3: freier Schenkel
- 15.4: arretierter Schenkel
- 15.5: Stößel
- 15.6: Mitnehmer / abgewinkelter Bereich von 15.3
- 15.7: Sockel / Lagerung

- 16: Steuerwelle
- 17: erstes Betätigungselement
- 18: zweites Betätigungselement
- 19: Getriebe
- 19.1: Schneckenrad
- 19.2: Antriebsritzel
- 20: Schutzscheibe
- 21: Drehgeber
- 22: Achse von 16
- 23: Befestigungsbolzen
- 24: Steckverbindung
- 25: Schraube
- 26: Antrieb / elektrischer Motor
- 27: erstes Halterungselement
- 28: zweites Halterungselement

- 40: Pfeil in Richtung Verriegelungsposition
- 41: Pfeil in Richtung Entriegelungsposition

- 50: Spiel / Freiraum zwischen 13 und 18
- 51: Spiel / Freiraum zwischen 13 und 17
- 52: Spiel / Freiraum zwischen 13 und 15

- la: Verriegelungsposition
- lb: Entriegelungsposition

## Patentansprüche

1. Verriegelungsvorrichtung (10) zur Verriegelung eines funktionswesentlichen Bauteils (11) eines Fahrzeugs mit
einem bewegbaren Sperrglied (13), welches zumindest zwei Positionen einnehmen kann, nämlich
eine Verriegelungsposition (Ia), in der das Sperrglied (13) in einer Wirkverbindung mit dem Bauteil (11) steht und das Bauteil (11) verriegelt, und eine Entriegelungsposition (Ib), in der das Sperrglied (13) in keiner Wirkverbindung mit dem Bauteil (11) steht, und
einem Energiespeicher (15) der zumindest teilweise mit dem Sperrglied (13) in mechanischer Wirkverbindung steht und der bei einem Wechsel des Sperrgliedes (13) von der Entriegelungsposition (lb) in die Verriegelungsposition (la) aufgeladen wird, und diese Energie zur Verstellung des Sperrglieds (13) bei einem umgekehrten Wechsel von der Verriegelungsposition (la) in die Entriegelungsposition (lb) entlädt,
wobei der Energiespeicher (15) über ein erstes Betätigungselement (17) aufgeladen wird,
**dadurch gekennzeichnet,**
**dass** ein zweites Betätigungselement (18) vorgesehen ist, wodurch der Energiespeicher (15) bei einem Wechsel des Sperrglieds (13) von der Verriegelungsposition (la) in die Entriegelungsposition (lb) nur in einem Sonderfall unterstützt wird, falls das Sperrglied (13) eingeklemmt ist und die Energie des Energiespeicher (13) nicht ausreicht, das Sperrglied (13) aus der Verriegelungsposition (la) zu bewegen.

2. Verriegelungsvorrichtung (10) nach Anspruch 1,
**dadurch gekennzeichnet,**
**dass** das Sperrglied (13) im Normalfall, wenn es nicht in der Verriegelungsposition (la) eingeklemmt ist, durch den Energiespeicher (15) von der Verriegelungsposition (la) in die Entriegelungsposition (lb) überführbar ist.

3. Verriegelungsvorrichtung (10) nach Anspruch 1 oder 2,
**dadurch gekennzeichnet,**
**dass** der Energiespeicher (15) mit dem ersten Betätigungselement (17) in mechanischer Wirkverbindung steht und im Normalfall mit dem Energiespeicher (15) und dem Sperrglied (13) mechanisch zusammenwirkt, wobei insbesondere das erste Betätigungselement (17) nockenförmig ausgestaltet ist.

4. Verriegelungsvorrichtung (10) nach einem der vorhergehenden Ansprüche,
**dadurch gekennzeichnet,**
**dass** der Energiespeicher (15) das Sperrglied (13) in Richtung der Entriegelungsposition (lb) drückt, wobei das erste Betätigungselement (17) der Wirkung des Energiespeichers (15) bei einem Wechsel des Sperrgliedes (13) von der Entriegelungsposition (lb) in die Verriegelungsposition (la) entgegenwirkt und hierdurch den Energiespeicher (15) auflädt, und dass
das Sperrglied (13) durch eine Feder (14) belastet ist, wobei die Feder (14) das Sperrglied (13) in Richtung (40) der Verriegelungsposition (la) drückt.

5. Verriegelungsvorrichtung (10) nach einem der vorhergehenden Ansprüche,
**dadurch gekennzeichnet,**
**dass** der Energiespeicher (15) formschlüssig mit dem Sperrglied (13) verbunden ist, wobei insbesondere ein Spiel (50) bei dem Formschluss zwischen den beiden Elementen (13, 15) vorgesehen ist.

6. Verriegelungsvorrichtung (10) nach einem der vorhergehenden Ansprüche,
**dadurch gekennzeichnet,**
**dass** das zweite Betätigungselement (18) mit dem ersten Betätigungselement (17) mechanisch gekoppelt ist, wobei insbesondere die beiden Betätigungselemente (17, 18) einstückig ausgestaltet sind.

7. Verriegelungsvorrichtung (10) nach einem der vorhergehenden Ansprüche,
**dadurch gekennzeichnet,**
**dass** das zweite Betätigungselement (18) neben dem ersten Betätigungselement (17) angeordnet ist und insbesondere im Sonderfall direkt mit dem Sperrglied (13) mechanisch zusammenwirkt.

8. Verriegelungsvorrichtung (10) nach einem der vorhergehenden Ansprüche,
**dadurch gekennzeichnet,**
**dass** das erste und das zweite Betätigungselement (17, 18) nockenförmig auf einer Steuerwelle (16) angeordnet sind, wobei insbesondere die Steuerwelle (16) direkt oder indirekt mittels eines Getriebes (19) antreibbar ist.

9. Verriegelungsvorrichtung (10) nach einem der vorhergehenden Ansprüche,
**dadurch gekennzeichnet,**
**dass** an der Steuerwelle (16) ein Zahnrad (19.1), insbesondere ein Schneckenrad (19.1), angeordnet ist, welches mechanisch mit den beiden Betätigungselementen (17, 18) verbunden ist, um diese anzutreiben.

10. Verriegelungsvorrichtung (10) nach einem der vorhergehenden Ansprüche,
**dadurch gekennzeichnet,**
**dass** der Energiespeicher (15) zumindest ein Federelement (15.1) aufweist, welches durch das erste Betätigungselement (17) vorspannbar ist, wodurch der Energiespeicher (15) seine Energie auflädt.

11. Verriegelungsvorrichtung (10) nach Anspruch 10,
**dadurch gekennzeichnet,**
**dass** der Energiespeicher (15) einen Stößel (15.5) aufweist, der mit dem Federelement (15.1) verbunden ist, und dass das erste Betätigungselement (17), insbesondere durch eine Druckkraft beim Laden des Energiespeichers (15), mit dem Stößel (15.5) zusammenwirkt.

12. Verriegelungsvorrichtung (10) nach Anspruch 10 oder 11,
**dadurch gekennzeichnet,**
**dass** das Federelement (15.1) teilweise in einem Sockel (15.7) fest positioniert ist, wobei der Sockel (15.7) insbesondere unlösbar mit einer Halteplatte (12.1), die einen Teil eines Gehäuses (12) der Verriegelungsvorrichtung (10) bildet, verbunden ist.

13. Verriegelungsvorrichtung (10) nach einem der Ansprüche 10 bis 12,
**dadurch gekennzeichnet,**
**dass** das Federelement (15.1) als eine Schenkelfeder (15.2) ausgestaltet ist, wobei ein erster Schenkel (15.3), der frei beweglich ist, mit dem ersten Betätigungselement (17) zusammenwirkt, und wobei insbesondere der erste Schenkel (15.3) gleichzeitig mit dem Sperrglied (13) formschlüssig zusammenwirkt, wofür der erste Schenkel (15.3) einen abgewinkelten Bereich (15.6) aufweist.

14. Verriegelungsvorrichtung (10) nach einem der vorhergehenden Ansprüche,
**dadurch gekennzeichnet,**
**dass** im Normalfall das erste Betätigungselement (17) mit dem Energiespeicher (15) ständig in mechanischem Kontakt steht und nur im Sonderfall keinen Kontakt zwischen dem ersten Betätigungselement (17) und dem Energiespeicher (15) vorhanden ist.

15. Verfahren zum Betrieb einer Verriegelungsvorrichtung (10) zur Verriegelung eines funktionswesentlichen Bauteils (11) eines Fahrzeugs mit
einem bewegbaren Sperrglied (13), welches zumindest zwei Positionen einnehmen kann, nämlich
eine Verriegelungsposition (Ia), in der das Sperrglied (13) in einer Wirkverbindung mit dem Bauteil (11) steht und das Bauteil (11) verriegelt, und eine Entriegelungsposition (Ib), in der das Sperrglied (13) in keiner Wirkverbindung mit dem Bauteil (11) steht, und
einem Energiespeicher (15) der zumindest teilweise mit dem Sperrglied (13) in mechanischer Wirkverbindung steht und der bei einem Wechsel des Sperrgliedes (13) von der Entriegelungsposition (lb) in die Verriegelungsposition (la) aufgeladen wird, und diese Energie in einem Normalfall zur Verstellung des Sperrglieds (13) bei einem umgekehrten Wechsel von der Verriegelungsposition (la) in die Entriegelungsposition (lb) entlädt,
wobei der Energiespeicher (15) über ein erstes Betätigungselement (17) aufgeladen wird,
**dadurch gekennzeichnet,**
**dass** nur für einen Sonderfall, indem das Sperrglied (13) eingeklemmt ist und die Energie des Energiespeicher (15) nicht ausreicht, das Sperrglied (13) aus der Verriegelungsposition (la) zu bewegen, ein zweites Betätigungselement (18) vorgesehen ist, durch welches der Energiespeicher (15) bei einem Wechsel des Sperrglieds (13) von der Verriegelungsposition (la) in die Entriegelungsposition (lb) unterstützt wird.

## Claims

1. Locking device (10) for locking an operative essential component (11) of a vehicle with
a moveable blocking element (13) which is able to adopt at least two positions, namely a locking position (Ia) in which the blocking element (13) is in an operative connection with the component (11) and locking the component (11) and
an unlocking position (Ib) in which the blocking element (13) is in no operative connection with the component (11) and
an energy storage (15) which is at least partially in a mechanical operative connection with the blocking element (13) and which is charged during a replacement of the blocking element (13) from the unlocking position (Ib) in the locking position (Ia) and that this energy discharges for an adjustment of the blocking element (13) during a reversed replacement from the locking position (Ia) into the unlocking position (Ib), whereas the energy storage (15) is charged via a first operating element (17), **characterized in that**,
a second operating element (18) is provided, whereas the energy storage (15) is only supported in a particular case during a replacement of the blocking element (13) from the locking position (Ia) into the unlocking position (Ib), if the blocking element (13) is trapped and the energy of the energy storage (15) is not sufficient to move the blocking element (13) out of the locking position (Ia).

2. Locking device (10) according to claim 1,
**characterized in that**,
the blocking element (13) is in a normal case convertible from the locking position (Ia) into the unlocking position (Ib) via the energy storage (15), unless it is not trapped in the locking position (Ia).

3. Locking device (10) according to claim 1 or 2,
**characterized in that**,
the energy storage (15) is in a mechanical operative connection with the first operating element (17) and is mechanically interacting with the energy storage (15) and the blocking element (13) in a normal case, whereas particularly the first operating element (17) is in a cam like shape.

4. Locking device (10) according to one of the preceding claims,
**characterized in that**,
the energy storage (15) pushes the blocking element (13) in the direction of the unlocking position (Ib), whereas the first operating element (17) is counter acting against the action of the energy storage (15) during a replacement of the blocking element (13) from the unlocking position (Ib) into the locking position (Ia) and hereby charging the energy storage (15) and
that the blocking element (13) is loaded by a spring (14) whereas the spring (14) is pushing the blocking element (13) into the direction (40) of the locking position (Ia).

5. Locking device (10) according to one of the preceding claims,
**characterized in that**,
the energy storage (15) is connected with the blocking element (13) in a form fitting manner whereas particularly an allowance (15) is provided in case of a form closure between both elements (13, 15).

6. Locking device (10) according to one of the preceding claims,
**characterized in that**,
the second operating element (18) is mechanically coupled to the first operating element (17) whereas particularly both operating elements (17, 18) are designed in one piece.

7. Locking device (10) according to one of the preceding claims,
**characterized in that**,
the second operating element (18) is assembled alongside the first operating element (17) and particularly is mechanically interacting directly with the blocking element (13) in a particular case.

8. Locking device (10) according to one of the preceding claims,
**characterized in that**,
the first and second operating element (17, 18) are assembled at a control shaft (16) in a cam-shaped manner whereas particularly the control shaft (16) is directly or indirectly actuated via a gear (19).

9. Locking device (10) according to one of the preceding claims,
**characterized in that**,
a gear wheel (19.1) particularly a worm gear (19.1) is assembled at the control shaft (16), which is mechanically connected with both operating elements (17, 18) in order to actuate them.

10. Locking device (10) according to one of the preceding claims,
**characterized in that**,
the energy storage (15) comprises at least one spring element (15.1) which is prestressable through the first operating element (17) wherein the energy storage (15) is charging energy.

11. Locking device (10) according to claim 10,
**characterized in that**,
the energy storage (15) comprises a ram (15.5), which is connected with the spring element (15.1) and that the first operating element (17) is interacting with the ram (15.1) particularly through a compressive force during charging of the energy storage (15).

12. Locking device (10) according to claim 10 or 11,
**characterized in that**,
a spring element (15.1) is in part firmly positioned in a socket (15.7), whereas the socket (15.7) is particularly permanently connected to a retaining plate (12.1) which is forming a part of the housing (12) of the locking device (10).

13. Locking device (10) according to one of the claims 10 to 12,
**characterized in that**,
the spring element (15.1) is shaped as a leg spring (15.2), whereas a first leg (15.3) which is freely moveable is interacting with the first operating element (17) and whereas particularly the first leg (15.3) is at the same time form fittingly interacting with the blocking element (13) for what the first leg (15.3) comprises a single tilted area (15.6).

14. Locking device (10) according to one of the preceding claims,
**characterized in that**,
in a normal case the first operating element (17) is in a permanent mechanical contact with the energy storage (15) and only in a particular case a contact between the first operating element (17) and the energy storage (15) is lacking.

15. Method to operate a locking device (10) for locking of an operative essential component (11) of a vehicle with
a moveable blocking element (13) which is able to adopt at least two positions namely a locking position (Ia) in which the blocking element (13) is in an operative connection with the component (11) and locking the component (11) and
an unlocking position (Ib) in which the blocking element (13) is in no operative connection with the component (11) and
an energy storage (15) which is at least partially in a mechanical operative connection with the blocking element (13) and which is charged during a replacement of the blocking element (13) from the unlocking position (Ib) in the locking position (Ia) and that this energy discharges for an adjustment of the blocking element (13) during a reversed replacement from the locking position (Ia) into the unlocking position (Ib) whereas the energy storage (15) is charged via a first operating element (17), **characterized in that**,
only in a particular case, in which the blocking element (13) is trapped and the energy of the energy storage (15) is not sufficient to move the blocking element (13) out of the blocking position (Ia), a second operative element (18) is provided through which the energy storage (15) is supported during a replacement of the blocking element (13) from the locking position (Ia) into the unlocking position (Ib).

## Revendications

1. Dispositif de verrouillage (10) destiné à verrouiller un élément fonctionnellement essentiel (11) d'un véhicule,
avec un élément de blocage mobile (13) qui peut prendre au moins deux positions, à savoir
une position de verrouillage (la), dans laquelle l'élément de blocage (13) est en liaison fonctionnelle avec l'élément (11) et verrouille l'élément (11),
et une position de déverrouillage (Ib), dans laquelle l'élément de blocage (13) n'est pas en liaison fonctionnelle avec l'élément (11),
et avec un accumulateur d'énergie (15), qui est au moins pour partie en liaison fonctionnelle mécanique avec l'élément de blocage (13) et qui est chargé lorsque l'élément de blocage (13) passe de la position de déverrouillage (lb) dans la position de verrouillage (la), et qui décharge cette énergie afin de déplacer l'élément, de blocage (13) lors d'un passage inverse de la position de verrouillage (la) dans la position de déverrouillage (Ib),
sachant que l'accumulateur d'énergie (15) est chargé au moyen d'un premier élément d'actionnement (17),
**caractérisé en ce qu'**il est prévu un deuxième élément d'actionnement (18) qui, lorsque l'élément de blocage (13) passe de la position de verrouillage (la) dans la position de déverrouillage (Ib), n'assiste l'accumulateur d'énergie (15) que dans un cas particulier, à savoir si l'élément de blocage (13) est coincé et si l'énergie de l'accumulateur d'énergie (15) ne suffit pas pour faire bouger l'élément de blocage (13) hors de la position de verrouillage (Ia).

2. Dispositif de verrouillage (10) selon la revendication 1,
**caractérisé en ce que**, dans le cas normal, s'il n'est pas coincé dans la position de verrouillage (la), l'élément de blocage (13) peut être transféré par l'accumulateur d'énergie (15) de la position de verrouillage (la) dans la position de déverrouillage (Ib).

3. Dispositif de verrouillage (10) selon la revendication 1 ou 2,
**caractérisé en ce que** l'accumulateur d'énergie (15) est en liaison fonctionnelle mécanique avec le premier élément d'actionnement (17) et, dans le cas normal, coopère mécaniquement avec l'accumulateur d'énergie (15) et l'élément de blocage (13), sachant que le premier élément d'actionnement (17) est notamment réalisé en forme de came.

4. Dispositif de verrouillage (10) selon l'une des revendications précédentes, **caractérisé en ce que** l'accumulateur d'énergie (15) pousse l'élément de blocage (13) en direction de la position de déverrouillage (Ib), sachant que le premier élément d'actionnement (17) s'oppose à l'action de l'accumulateur d'énergie (15) lorsque l'élément de blocage (13) passe de la position de déverrouillage (lb) dans la position de verrouillage (la) et charge ainsi l'accumulateur d'énergie (15),
et **en ce que** l'élément de blocage (13) est sollicité par un ressort (14), sachant que le ressort (14) pousse l'élément de blocage (13) en direction (40) de la position de verrouillage (la).

5. Dispositif de verrouillage (10) selon l'une des revendications précédentes, **caractérisé en ce que** l'accumulateur d'énergie (15) est relié par complémentarité de formes à l'élément de blocage (13), sachant notamment qu'il est prévu un jeu (50) dans la liaison par complémentarité de formes entre les deux éléments (13, 15).

6. Dispositif de verrouillage (10) selon l'une des revendications précédentes, **caractérisé en ce que** le deuxième élément d'actionnement (18) est accouplé mécaniquement au premier élément d'actionnement (17), sachant notamment que les deux éléments d'actionnement (17, 18) sont réalisés d'un seul tenant.

7. Dispositif de verrouillage (10) selon l'une des revendications précédentes, **caractérisé en ce que** le deuxième élément d'actionnement (18) est disposé à côté du premier élément d'actionnement (17) et notamment, dans le cas particulier, coopère mécaniquement directement avec l'élément de blocage (13).

8. Dispositif de verrouillage (10) selon l'une des revendications précédentes, **caractérisé en ce que** le premier et le deuxième éléments d'actionnement (17, 18) sont disposés en forme de cames sur un arbre de commande (16), sachant notamment que l'arbre de commande (16) peut être entraîné directement ou indirectement au moyen d'un mécanisme de transmission (19).

9. Dispositif de verrouillage (10) selon l'une des revendications précédentes, **caractérisé en ce qu'**une roue d'engrenage (19.1), en particulier une roue tangente (19.1), est disposée sur l'arbre de commande (16) et est reliée mécaniquement aux deux éléments d'actionnement (17, 18) afin de les entraîner.

10. Dispositif de verrouillage (10) selon l'une des revendications précédentes, **caractérisé en ce que** l'accumulateur d'énergie (15) présente au moins un élément formant ressort (15.1) qui peut être précontraint par le premier élément d'actionnement (17), de sorte que l'accumulateur d'énergie (15) charge son énergie.

11. Dispositif de verrouillage (10) selon la revendication 10,
**caractérisé en ce que** l'accumulateur d'énergie (15) présente un poussoir (15.5) qui est relié à l'élément formant ressort (15.1),
et **en ce que** le premier élément d'actionnement (17) coopère avec le poussoir (15.5) notamment par une force de pression lors du chargement de l'accumulateur d'énergie (15).

12. Dispositif de verrouillage (10) selon la revendication 10 ou 11,
**caractérisé en ce que** l'élément formant ressort (15.1) est pour partie positionné fixement dans un socle (15.7), sachant que le socle (15.7) est notamment relié de manière inséparable à une plaque de maintien (12.1) qui forme une partie d'un boîtier (12) du dispositif de verrouillage (10).

13. Dispositif de verrouillage (10) selon l'une des revendications 10 à 12, **caractérisé en ce que** l'élément formant ressort (15.1) est réalisé sous la forme d'un ressort à branches (15.2), sachant qu'une première branche (15.3), qui est librement mobile, coopère avec le premier élément d'actionnement (17), et sachant notamment que la première branche (15.3) coopère en même temps par complémentarité de formes avec l'élément de blocage (13), la première branche (15.3) présentant à cet effet une région coudée (15.6).

14. Dispositif de verrouillage (10) selon l'une des revendications précédentes, **caractérisé en ce que**, dans le cas normal, le premier élément d'actionnement (17) est en permanence en contact mécanique avec l'accumulateur d'énergie (15), et il n'existe pas de contact entre le premier élément d'actionnement (17) et l'accumulateur d'énergie (15) uniquement dans le cas particulier.

15. Procédé pour faire fonctionner un dispositif de verrouillage (10) destiné à verrouiller un élément fonctionnellement essentiel (11) d'un véhicule,
avec un élément de blocage mobile (13) qui peut prendre au moins deux positions, à savoir
une position de verrouillage (Ia), dans laquelle l'élément de blocage (13) est en liaison fonctionnelle avec l'élément (11) et verrouille l'élément (11),
et une position de déverrouillage (Ib), dans laquelle l'élément de blocage (13) n'est pas en liaison fonctionnelle avec l'élément (11),
et avec un accumulateur d'énergie (15), qui est au moins pour partie en liaison fonctionnelle mécanique avec l'élément de blocage (13) et qui est chargé lorsque l'élément de blocage (13) passe de la position de déverrouillage (lb) dans la position de verrouillage (la), et qui décharge cette énergie dans un cas normal afin de déplacer l'élément de blocage (13) lors d'un passage inverse de la position de verrouillage (la) dans la position de déverrouillage (Ib),
sachant que l'accumulateur d'énergie (15) est chargé au moyen d'un premier élément d'actionnement (17),
**caractérisé en ce que**, uniquement pour un cas particulier dans lequel l'élément de blocage (13) est coincé et l'énergie de l'accumulateur d'énergie (15) ne suffit pas pour faire bouger l'élément de blocage (13) hors de la position de verrouillage (la), il est prévu un deuxième élément d'actionnement (18) qui assiste l'accumulateur d'énergie (15) lorsque l'élément de blocage (13) passe de la position de verrouillage (la) dans la position de déverrouillage (Ib).
